# EUROPÄISCHE PATENTSCHRIFT

(11) **EP 2 545 296 B1**
(45) Veröffentlichungstag und Bekanntmachung des Hinweises auf die Patenterteilung: **16.05.2018**
(21) Anmeldenummer: 11700417.6
(22) Anmeldetag: 14.01.2011
(51) Int. Cl.: F16G 5/20

(54) **ANTRIEBSRIEMEN, INSBESONDERE KEILRIPPENRIEMEN, MIT EINER GEWEBEAUFLAGE**
DRIVE BELT, IN PARTICULAR V-RIBBED BELT, WITH A FABRIC COATING
COURROIE D'ENTRAÎNEMENT, EN PARTICULIER COURROIE TRAPÉZOÏDALE À NERVURES, DOTÉE D'UN REVÊTEMENT EN TISSU

(30) Priorität: 10.03.2010 DE 102010015901
(43) Veröffentlichungstag der Anmeldung: 16.01.2013
(73) Patentinhaber: ContiTech Antriebssysteme GmbH, 30165 Hannover (DE)
(72) Erfinder: KANZOW, Henning, 30419 Hannover (DE); PASTUOVIC, Mario, 30167 Hannover (DE); MAHNKEN, Claus-Lüder, 27367 Ahausen (DE); MOSES, Reinhold, 37632 Eimen (DE); TEVES, Reinhard, 30926 Seelze (DE); GEBHARDT, Siegmar, 30459 Hannover (DE); BALTES, Thomas, 30177 Hannover (DE); BONKOWSKI, Manfred, 30900 Wedemark (DE)
(74) Vertreter: Preusser, Andrea
(86) Internationale Anmeldenummer: PCT/EP2011/050451
(87) Internationale Veröffentlichungsnummer: WO 2011/110372

(56) Entgegenhaltungen:
- EP-A1- 0 345 367
- EP-A2- 2 072 857
- DE-A1- 3 931 553
- DE-A1-102005 062 082
- GB-A- 592 294
- GB-A- 811 108
- GB-A- 2 292 339
- GB-A- 2 349 113
- JP-A- 4 000 040
- JP-U- H0 210 482

## Beschreibung

Die Erfindung betrifft einen Antriebsriemen mit einem elastischen Grundkörper auf der Basis eines Vulkanisats, umfassend eine Decklage als Riemenrücken und einen Unterbau mit einer Kraftübertragungszone, wobei die Kraftübertragungszone mit einer Gewebeauflage versehen ist, die aus Kettfäden und Schussfäden gebildet ist.
Antriebsriemen, die auch als Kraftübertragungsriemen bezeichnet werden und im Funktionszustand zumeist endlos geschlossen sind, können als Flachriemen, Keilriemen, Keilrippenriemen, Zahnriemen und Kupplungsriemen ausgebildet sein. Von besonderer Bedeutung ist der Keilrippenriemen, wobei diesbezüglich auf folgende Patentliteratur verwiesen wird:
GB811108 DE 38 23 157 A1
DE 100 16 351 A1
DE 10 2006 007 509 A1
EP 0 590 423 A2
EP 0 737 228 B1
EP 0 831 247 B1
EP 0 866 834 B1
EP 1 108 750 A1
EP 1 129 308 B1
US 3 981 206
Die Elastizität eines Antriebsriemens wird dadurch erreicht, dass der Grundkörper und somit die Decklage und der Unterbau aus einem polymeren Werkstoff mit elastischen

Eigenschaften bestehen, wobei hier insbesondere die beiden Werkstoffgruppen Elastomere und thermoplastische Elastomere (TPE) zu nennen sind. Von besonderer Bedeutung sind Elastomere auf der Basis einer vulkanisierten Kautschukmischung.

Der elastische Grundkörper ist ferner zumeist noch mit einem eingebetteten Festigkeitsträger bzw. Zugträger versehen, der ein- oder mehrlagig ausgeführt sein kann.

Antriebsriemen werden zur Geräuschreduzierung wie auch zur Erhöhung der Abriebsbeständigkeit im Bereich der Kraftübertragungszone mit einer Beschichtung versehen. Der diesbezügliche Stand der Technik ist:
- Eingesetzt wird eine Flockauflage (DE 100 16 351 A1), insbesondere in Form eines Baumwoll- oder Aramidflockes, oder eine dünne mit Fasern (z.B. Armidfasern) gefüllte elastische Polymerschicht, beispielsweise nach der Offenlegungsschrift DE 38 23 157 A1, wobei die Anhaftung der Flockauflage zumeist mittels einer Sprühlösung erfolgt. Bei manchen Motoren wirkt jedoch diese Beschichtung nicht dauerhaft. Außerdem treten hier bei manchen Motoren Geräuschprobleme bei Feuchtigkeit auf.

Bei einem Keilrippenriemen-Trieb mit entkoppelter Kurbelwellenscheibe wurden bislang häufig Riemen mit einer Flockbeschichtung eingesetzt. Diese verlor durch Verschleiß nach wenigen tausend Kilometern ihre Geräusch dämmende Funktion.
- Verwendet wird eine gestrickte Textilauflage, beispielsweise nach der Patentschrift US 3 981 206. Der Nachteil ist hier, dass auf Prüfmotoren beim Startvorgang Geräusche entstehen.

Bei einem Keilrippenriemen-Trieb mit entkoppelter Kurbelwellenscheibe wurde bereits versucht, als Alternative zu der oben genannten Flockbeschichtung eine Textilauflage auf der Basis von Gestricken zu verwenden. Dabei zeigte jedoch dieses Textilkonzept von Anfang an Geräusche, da aufgrund von Vulkanisatdurchtritt durch die Maschen die Reibung zu hoch war. Andere Gestricke, insbesondere auf der Basis von Baumwolle, verschleißten zu schnell und zeigten dann ebenfalls nach einigen tausend Kilometern Geräusche.
- Verwendet wird eine Textilauflage in Form eines Gewirkes. Diesbezüglich wird insbesondere auf die Offenlegungsschrift DE 10 2006 007 509 A1 verwiesen. Die Kettwirkware besteht dabei aus einem ersten Garn, insbesondere aus einem Polyamid (PA) oder Polyester (PES), und einem zweiten Garn, insbesondere aus einem Polyurethan (PU). Nachteilig ist hier, dass auf Prüfmotoren bei Feuchtigkeit ebenfalls Geräusche entstehen.
- In der Offenlegungsschrift DE 10 2007 062 285 A1 wird ein Zahnriemen mit schussbetonter Gewebeauflage offenbart. Nachteilig ist, dass Schussgarn zwei Funktionen hat. So werden Verschleißschutz und Festigkeit in Riemenlängsrichtung allein durch das Schussgarn gewährleistet. Nach Verschleiß des Schussgarns ist auch die Festigkeit in Riemenlängsrichtung nicht mehr vorhanden.

Bei Zahnriemen werden normalerweise Polyamid-Gewebe eingesetzt, bei denen das Schussgarn texturiert ist und daher dehnbar ist. Diese Gewebe werden mit der dehnbaren Schussrichtung in Riemenlängsrichtung aufgelegt. Bei Gummizahnriemen sind diese Gewebe zumeist mit einem Haftmittel auf RFL-Basis ausgerüstet. Bei Polyurethanriemen werden auch unpräparierte Gewebe eingesetzt.
- Nach einer neueren Entwicklung gemäß DE 10 2008 012 044 A1 werden anstelle der Textilauflagen oder in Kombination mit diesen eine Folie (z.B. PTFE-Folie) oder ein Folienverbund (z.B. PA-PTFE-Folienverbund) eingesetzt, insbesondere unter dem Aspekt der ölbeständigen Ausrüstung eines Antriebsriemens.
- Ergänzend wird noch auf die Druckschrift US 6 491 598 verwiesen, wo Antriebsriemen mit einem bidirectionalen Gewebe, Gestrick oder Gewirke ausgerüstet sind.

Einen neueren Entwicklungsschwerpunkt bilden jedoch die Gewebeauflagen mit Kettfäden und Schussfäden, die dem gattungsgemäßen Antriebsriemen auch zugrunde liegen.
Im Hintergrund der oben erwähnten Probleme bei Einsatz einer Gewebeauflage besteht die Aufgabe der Erfindung darin, einen Antriebsriemen, insbesondere einen Keilrippenriemen, bereitzustellen, und zwar unter dem Aspekt der Reduzierung der Laufgeräusche sowie eines hohen Verschleißschutzes der Lauffläche auch bei hohem Schlupf. Die Aufgabe wird gelöst durch ein Antriebsriemen gemäß Anspruch 1. Anders als bei den bisherigen Zahnriemen wirken hier die Kettfäden in Riemenlängsrichtung. Dabei ist die Dehnbarkeit in Kettrichtung wichtig und höher als bei Zahnriemen, bei denen dies nicht von wesentlicher Bedeutung ist. Die Dehnbarkeit der Gewebeauflage ist jedoch in Schussrichtung größer als in Kettrichtung.
Von wesentlicher Bedeutung ist ferner, dass sowohl die Kettfäden als auch die Schussfäden texturiert sind. Die Texturierung ist eine bekannte Bezeichnung aus der Textilchemie, unter der man die Erzeugung einer speziellen Faser-Textur durch maschinelle Behandlung von thermoplastischen Chemiefasern versteht. Die Texturierung soll den Fasern eine bessere Haftung im Gespinstverband (hier im Gewebe), eine erhöhte mechanische Beanspruchbarkeit, einen volleren Griff, d. h. ein größeres Volumen und Bauschigkeit, sowie den daraus hergestellten Textilien eine höhere Elastizität und besseres Wärmeisolierungsvermögen verleihen. Hinsichtlich Details der Texturierung wird auf Römpp Online, Version 3.6, Mai 2005, verwiesen.
Im Folgenden werden die vorteilhaften Gestaltungsmöglichkeiten des Antriebsriemens mit der neuartigen Textilauflage näher vorgestellt.
- Hinsichtlich der Reißdehnung der Kett- und Schussrichtung der Gewebeauflage vor der Vulkanisation gelten folgende Anforderungen:

| | |
|---|---|
| Kettrichtung: | ≥ 30 %, insbesondere ≥ 50 % |
| Schussrichtung: | ≥ 50 %, insbesondere ≥ 100 % |

- Das Flächengewicht der Gewebeauflage beträgt ≤ 500 g/mm², insbesondere ≤ 250 mm².
- Bei der Gewebeauflage ist der Massenanteil an Schussfadenmaterial geringer als der Anteil an Kettfadenmaterial, insbesondere in Verbindung mit folgenden Mengenbereichen:

| | |
|---|---|
| Schussfadenmaterial: | 20 bis 40 Gew.-%, beispielsweise 35 Gew.-% |
| Kettfadenmaterial: | 80 bis 60 Gew.-%, beispielsweise 65 Gew.-% |

- Die Kettfäden und/oder Schussfäden, insbesondere beide Fadentypen, sind aus Garnen gebildet, insbesondere aus Filamentgarnen. Die Filamentgarne bestehen dabei aus Einzelfilamenten, und zwar in Verbindung mit einem Längengewicht von ≤ 3.5 dtex, insbesondere ≤ 2.5 dtex. Derartige Low-dtex-Garne sind besser gegen Verschleiß durch Biegewechselermüdung. Die Filamentgarne aus Einzelfilamenten gelangen vorzugsweise für die Kettfäden zum Einsatz.

Im Rahmen der Werkstoffgruppe Polyamid (PA) gelangen PA6, PA46 oder insbesondere PA66 zum Einsatz. Die Kettfäden und Schussfäden können aus dem gleichen Material oder aus verschieden Materialien sein.
- Das Kettfadenmaterial und/oder Schussfadenmaterial, insbesondere bei beiden Fadentypen, ist/sind mit einem Alterungsschutzmittel ausgestattet, das insbesondere die Elemente Kupfer und/oder Jod, insbesondere beide Elemente, umfasst.
- Bei der Gewebeauflage ist der Anteil des Schussfadenmaterials auf ihrer Außenseite (Riemenoberfläche) größer als auf ihrer Innenseite (Haftseite zum Unterbau). Auf diese Weise ist es möglich, dass die Gewebeauflage, insbesondere in Verbindung mit der Texturierung, eine geschlossene Oberfläche aufweist, die den Durchtritt des Vulkanisats verhindert. Der Vulkanisatdurchtritt beschränkt sich dann im Wesentlichen auf den offenen Gewebestoß (Breite etwa 2 mm). Ferner wird durch diese Maßnahme der Verschleißschutz erhöht.

Es kommt also das Rohgewebe zum Einsatz. Mit dem Verzicht eines derartigen Haftmittels wird zusätzlich ein niedriger und über die Laufzeit gesehen ein im Wesentlichen konstanter CoF-Wert erzielt.
- Stattdessen wird die Gewebeauflage vorzugsweise mittels einer Polyolefin-Schicht am Unterbau angebunden. Als Polyolefine gelangen Polyethlen (PE) oder Polypropylen (PP), insbesondere PE, zum Einsatz. Vorzugsweise liegt diese Haftschicht als Folie vor. Im Rahmen der Vulkanisation findet ein Erweichen bzw. Schmelzen dieser thermoplastischen Werkstoffe statt, verbunden mit einer wirksamen Haftung zwischen der Gewebeauflage und dem Unterbau.

Hinsichtlich vorteilhafter Vulkanisate auf der Basis von Kautschukmischungen wie auch der Faserbeimischung wird im Rahmen der Figurenbeschreibung noch näher eingegangen.

Die folgende Tabelle hält nun die Ergebnisse von acht Keilrippenriemen fest, die mit verschiedenen Beschichtungen versehen waren und auf einem Dieselmotor 44 Stunden im Leerlauf gealtert wurden. Dabei wurden diese Riemen vorher und anschließend auf den Reibungskennwert (CoF-Wert) gemessen und geräuschlich mit Hilfe eines Dieselmotors mit entkoppelter Kurbenwellenscheibe bewertet.

| **Beschichtung** | **CoF (frisch)** | **Co-F (nachAbrieb)** | **Geräusche (frisch)** | **Geräusche (nach Abrieb)** |
|---|---|---|---|---|
| Baumwollflock | 1.3 | 1.8 | - | - |
| Aramidflock | 1.0 | 1.6 | + | - |
| Baumwollgestrick 1 | 1.3 | 1.5 | - | - |
| Baumwollgestrick 2 | 1.1 | 1.5 | + | - |
| Mischgestrick aus PA66/Baumwolle | 1.2 | 1.4 | + | - |
| PA-Gestrick mit RFL-Beschichtung | 1.8 | 1.5 | - | - |
| PA-Gestrick ohne RFL-Beschichtung | 1.5 | 1.4 | - | - |
| PA-Gewebe ohne RFL-Haftmittel | 1.0 | 1.1 | + | + |

| | | | | |
|---|---|---|---|---|
| Bewertung: + (keine Startgeräusche); - (Startgeräusche) | | | | |

Im Hinblick auf die Erfüllung der eingangs genannten Aufgabenstellung erzielt der erfindungsgemäße Antriebsriemen mit der neuartigen Gewebeauflage die besten Werte. Der geringe CoF-Wert garantiert Trockengeräuschfreiheit sowie einen geringeren Verschleiß, insbesondere bei Scheibenschiefstellung. Auch wird ein im Wesentlichen konstanter CoF-Wert erzielt, auch nach einer größeren Laufzeit, bedingt durch geringen Verschleiß. Die Geräuschsituation unter den beiden Prüfkriterien "frisch" und "nach Abrieb" zeichnet sich durch eine positive Gesamtbewertung aus.

Die besten Werte erhält man dabei, wenn die Gewebeauflage frei von einem RFL-Haftmittel ist, und zwar unter Einsatz einer PE-Folie. Versuche hatten ferner gezeigt, dass bei Einsatz einer Gewebeauflage auf der Basis von PA6.6 die optimalen Werte erreicht werden.

Die Erfindung wird nun anhand eines Ausführungsbeispieles unter Bezugnahme auf eine schematische Querschnittsdarstellung beschrieben.

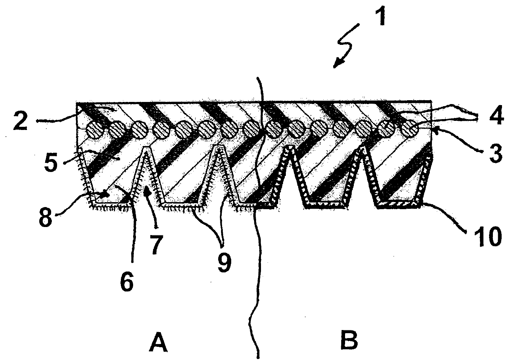

Die einzige Figur zeigt einen Antriebsriemen 1 in Form eines Keilrippenriemens mit einer Decklage 2 als Riemenrücken, einer Festigkeitsträgerlage 3 mit in Längsrichtung verlaufenden parallel angeordneten Zugträgern 4 sowie mit einem Unterbau 5. Der Unterbau weist eine Keilrippenstruktur auf, gebildet aus Rippen 6 und Rillen 7. Der Unterbau umfasst dabei die Kraftübertragungszone 8.

Die Decklage 2 und der Unterbau 5 bilden dabei als Gesamteinheit den elastischen Grundkörper auf der Basis eines Vulkanisats, insbesondere in Form einer vulkanisierten Kautschukmischung, enthaltend wenigstens eine Kautschukkomponente und Mischungsingredienzien. Als Kautschukkomponente wird insbesondere ein Ethylen-Propylen-Mischpolymerisat (EPM), ein Ethylen-Propylen-Dien-Mischpolymerisat (EPDM), (teil)hydrierter Nitrilkautschuk (HNBR), Chloropren-Kautschuk (CR), Fluor-Kautschuk (FKM), Naturkautschuk (NR), Styrol-Butadien-Kautschuk (SBR) oder Butadien-Kautschuk (BR) eingesetzt, die unverschnitten oder mit wenigsten einer weiteren Kautschukkomponente, insbesondere mit einem der vorgenannten Kautschuktypen, verschnitten sind, beispielsweise in Form eines EPM/EPDM- oder SBR/BR-Verschnittes. Von besonderer Bedeutung ist dabei EPM oder EPDM oder ein EPM/EPDM-Verschnitt, insbesondere wiederum für den Unterbau 5. Die Mischungsingredienzien umfassen dabei wenigstens einen Vernetzer oder ein Vernetzersystem (Vernetzungsmittel und Beschleuniger). Weitere Mischungsingredienzien sind zumeist noch ein Füllstoff und/oder ein Verarbeitungshilfsmittel und/oder ein Weichmacher und/oder ein Alterungsschutzmittel sowie gegebenenfalls weitere Zusatzstoffe, beispielsweise Fasern und Farbpigmente. Diesbezüglich wird auf den allgemeinen Stand der Kautschukmischungstechnologie verwiesen.

Vorteilhafterweise enthält zumindest die Unterbaumischung unter der Gewebeauflage Fasern, insbesondere aus Baumwolle.

Die Zugträger 4 sind insbesondere Einzelcorde, beispielsweise aus Stahl, Polyamid (PA), Aramid, Polyester (PES), Glasfasern, Kohlefasern, Polyetheretherketon (PEEK) oder Polethylen-2,6-naphthalat (PEN). Nach einer neueren Entwicklung werden als Zugträger 4 auch Polyethylentherephthalat (PET; DE 10 2009 026 077.3) oder Basalt (DE 10 2009 044 153.0) als Werkstoffe eingesetzt.

Innerhalb der Kraftübertragungszone 8 ist der Antriebsriemen 1 nach dem Stand der Technik mit einer Flockauflage 9 (Abschnitt A) versehen.

Im Vergleich hierzu weist der erfindungsgemäße Antriebsriemen 1 innerhalb seiner Kraftübertragungszone 8 die neue Gewebeauflage 10 (Abschnitt B) gemäß der Kennzeichnenden Merkmale des Kennzeichens des Anspruchs 1 auf, insbesondere unter dem Aspekt einer geschlossenen Oberfläche, die den Durchtritt des Vulkanisats, beispielsweise auf Basis EPDM, verhindert.

Die Rippen 6 werden im Formprozess während der Vulkanisation ausgeformt.

Die Decklage 2 des Antriebsriemens 1 kann unbeschichtet sein. Häufig wird auch diese Decklage mit einer Beschichtung versehen. Zumeist genügt dabei eine Beschichtung nach dem Stand der Technik. Diesbezüglich wird auf die Beschreibungseinleitung verwiesen. Die Decklage 2 kann jedoch auch mit der neuen Gewebeauflage ausgestattet sein, was jedoch im Gegensatz zur Kraftübertragungszone 8 nicht unbedingt erforderlich ist.

Die neue Textilauflage 10 sowie eine gegebenenfalls eingesetzte Beschichtung für die Decklage 2 kann zudem noch ölbeständig ausgerüstet sein, beispielsweise nach der Lehre gemäß WO 2005/080821 A1.

Auch wenn die neue Gewebeauflage vorrangig für Keilrippenriemen zum Einsatz gelangt, so können hiermit auch andere Formen von Antriebsriemen ausgestattet werden.

Der Antriebsriemen, insbesondere der Keilrippenriemen, findet insbesondere Anwendung für:
- ein Fahrzeug mit einem Start/Stopp-System wegen der besonderen Verschleißschutzanforderung;
- einen Trieb mit einer entkoppelten Kurbelwellenscheibe, da hier besondere Geräuschanforderungen gestellt werden.

### Bezugszeichenliste

### (Teil der Beschreibung)

- 1: Antriebsriemen (Keilrippenriemen)
- 2: Decklage (Riemenrücken)
- 3: Festigkeitsträgerlage
- 4: Zugträger in Form von Einzelcorden
- 5: Unterbau
- 6: Rippen
- 7: Rillen
- 8: Kraftübertragungszone
- 9: Flockauflage (Abschnitt A)
- 10: Gewebeauflage (Abschnitt B)

## Patentansprüche

1. Antriebsriemen (1) mit einem elastischen Grundkörper auf der Basis eines Vulkanisats, umfassend eine Decklage (2) als Riemenrücken und einen Unterbau (5) mit einer Kraftübertragungszone (8), wobei die Kraftübertragungszone mit einer Gewebeauflage (10) versehen ist, die aus Kettfaden und Schussfäden gebildet ist, wobei, die Gewebeauflage (10) frei von einer Haftschicht auf der Basis von Kautschuk und/oder Resorcin-Formaldehyd-Latex ist, und
- die Kettfäden und/oder Schussfaden aus Polyethylentherephthalat (PET), Polyamid (PA), Polyetheretherketon (PEEK), Polyphenylensulfid (PPS), Polyethylen-2,6-naphthalat (PEN) oder Polyurethan (PU) oder aus Gemischen der vorgenannten Werkstoffarten bestehen;
- die Kettfaden in Riemenlängsrichtung und die Schussfäden in Riemenquerrichtung verlaufen;
- die Kettfaden und Schussfäden dehnbar sind, wobei die Dehnbarkeit der Schussfäden größer ist als die der Kettfaden und **dadurch gekennzeichnet, dass**
- die Kettfaden und Schussfaden texturiert sind
- der Massenanteil an Schussfadenmaterial geringer ist als der Anteil an Kettfadenmaterial.

2. Antriebsriemen nach Anspruch 1, **dadurch gekennzeichnet, dass** die Reißdehnung der Gewebeauflage (10) in Kettrichtung ≥ 30 % ist.

3. Antriebsriemen nach einem der Ansprüche 1 bis 2, **dadurch gekennzeichnet, dass** das Flächengewicht der Gewebeauflage (10) ≤ 500 g/m² ist.

4. Antriebsriemen nach Anspruch 1, **dadurch gekennzeichnet, dass** hinsichtlich des Schussfadenmaterials und Kettfadenmaterials folgende Mengenbereiche gelten:

5. Antriebsriemen nach Anspruch 1, **dadurch gekennzeichnet, dass** im Rahmen der Werkstoffgruppe Polyamid (PA) PA6, PA46 oder insbesondere PA66 zum Einsatz gelangen.

6. Antriebsriemen nach einem der Ansprüche 1 bis 5, **dadurch gekennzeichnet, dass** das Kettfadenmaterial und/oder Schussfadenmaterial mit einem Alterungsschutzmittel ausgestattet ist/sind.

7. Antriebsriemen nach Anspruch 6, **dadurch gekennzeichnet, dass** das Alterungsschutzmittel die Elemente Kupfer und/oder Jod umfasst.

8. Antriebsriemen nach einem der Ansprüche 1 bis 7, **dadurch gekennzeichnet, dass** bei der Gewebeauflage (10) der Anteil des Schussfadenmaterials auf ihrer Außenseite größer ist als auf ihrer Innenseite.

9. Antriebsriemen nach einem der Ansprüche 1 bis 8, **dadurch gekennzeichnet, dass** die Gewebeauflage (10) mittels einer Polyolefin-Schicht am Unterbau (5) angebunden ist.

10. Antriebsriemen nach einem der Ansprüche 1 bis 9, **dadurch gekennzeichnet, dass** der elastische Grundkörper ein Vulkanisat auf der Basis einer vulkanisierten Kautschukmischung ist, enthaltend wenigstens eine Kautschukkomponente und Mischungsingredienzien.

11. Antriebsriemen nach einem der Ansprüche 1 bis 10, **dadurch gekennzeichnet, dass** der Antriebsriemen (1) als Keilrippenriemen ausgebildet ist.

12. Verwendung eines Antriebsriemens nach einem der Ansprüche 1 bis 11 für ein Fahrzeug mit einem Start/Stopp-System.

13. Verwendung eines Antriebsriemens nach einem der Ansprüche 1 bis 11 für einen Trieb mit einer entkoppelten Kurbelwellenscheibe.

## Claims

1. Drive belt (1) having an elastic main body based on a vulcanizate, comprising an outer ply (2) as belt backing and a substructure (5) having a force transmission zone (8), said force transmission zone having been provided with a weave overlay (10) formed from warp threads and weft threads, wherein the weave overlay (10) is free of any adhesive layer based on rubber and/or resorcinolformaldehyde latex, and
- the warp threads and/or weft threads consist of polyethylene terephthalate (PET), polyamide (PA), polyetheretherketone (PEEK), polyphenylene sulfide (PPS), polyethylene 2,6-naphthalate (PEN) or polyurethane (PU), or of mixtures of the aforementioned material types;
- the warp threads run in longitudinal belt direction and the weft threads in transverse belt direction;
- the warp threads and weft threads are extensible, the extensibility of the weft threads being greater than that of the warp threads, and **characterized in that**
- the warp threads and weft threads have been textured,
- the proportion by mass of weft thread material is lower than the proportion of warp thread material.

2. Drive belt according to Claim 1, **characterized in that** the elongation at break of the weave overlay (10) in warp direction is ≥ 30%.

3. Drive belt according to either of Claims 1 and 2, **characterized in that** the basis weight of the weave overlay (10) is ≤ 500 g/m².

4. Drive belt according to Claim 1, **characterized in that** the following ranges of amount are applicable with regard to the weft thread material and warp thread material:
| | |
|---|---|
| weft thread material: | 20% to 40% by weight |
| warp thread material: | 80% to 60% by weight |

5. Drive belt according to Claim 1, **characterized in that** polyamide (PA) used within the group of materials is PA6, PA46 or especially PA66.

6. Drive belt according to any of Claims 1 to 5, **characterized in that** the warp thread material and/or weft thread material has/have been equipped with an ageing stabilizer.

7. Drive belt according to Claim 6, **characterized in that** the ageing stabilizer comprises the elements copper and/or iodine.

8. Drive belt according to any of Claims 1 to 7, **characterized in that**, in the weave overlay (10), the proportion of the weft thread material is greater on its outside than on its inside.

9. Drive belt according to any of Claims 1 to 8, **characterized in that** the weave overlay (10) has been attached to the substructure (5) by means of a polyolefin layer.

10. Drive belt according to any of Claims 1 to 9, **characterized in that** the elastic main body is a vulcanizate based on a vulcanized rubber mixture comprising at least one rubber component and mixture ingredients.

11. Drive belt according to any of Claims 1 to 10, **characterized in that** the drive belt (1) takes the form of a V-ribbed belt.

12. Use of a drive belt according to any of Claims 1 to 11 for a vehicle having a start/stop system.

13. Use of a drive belt according to any of Claims 1 to 11 for a drive having a decoupled crankshaft pulley.

## Revendications

1. Courroie d'entraînement (1) dotée d'un corps élastique de base réalisé à partir d'un vulcanisé, comprenant une couche de recouvrement (2) servant de dos de courroie et un soubassement (5) doté d'une zone (8) de transfert de force, la zone de transfert de force étant dotée d'un revêtement (10) en tissu formé de fils de chaîne et de fils de trame,
le revêtement (10) en tissu dépourvu d'une couche d'adhérence étant à base de caoutchouc et/ou de latex à la résorcine et au formaldéhyde,
les fils de chaîne et/ou les fils de trame étant constitués de poly(téréphtalate d'éthylène (PET), de polyamide (PA), de polyétheréthercétone (PEEK), de poly(sulfure de phénylène) (PPS), de poly(2,6)naphtalate d'éthylène (PEN), de polyuréthane (PU) ou de mélanges de ces types de matériaux,
les fils de chaîne s'étendant dans le sens de la longueur de la courroie et les fils de trame dans le sens transversal par rapport à la courroie,
les fils de chaîne et les fils de trame étant extensibles, l'extensibilité des fils de trame étant supérieure à celle des fils de chaîne,
**caractérisée en ce que**
les fils de chaîne et les fils de trame sont texturés et
la proportion massique du matériau de fils de trame est inférieure à celle du matériau des fils de chaîne.

2. Courroie d'entraînement selon la revendication 1, **caractérisée en ce que** l'allongement à la rupture du revêtement (10) en tissu dans le sens de la chaîne est ≥ 30 %.

3. Courroie d'entraînement selon l'une des revendications 1 et 2, **caractérisée en ce que** le poids par unité de surface du revêtement (10) en tissu est ≤ 500 g/m².

4. Courroie d'entraînement selon la revendication 1, **caractérisée en ce que** le matériau des fils de trame et le matériau des fils de chaîne respectent les plages de quantités suivantes :
matériau des fils de trame : 20 à 40 % en poids
matériau des fils de chaîne : 80 à 60 % en poids.

5. Courroie d'entraînement selon la revendication 1, **caractérisée en ce qu'**au sein du groupe des matériaux de polyamide (PA), on utilise le PA6, le PA46 et en particulier le PA66.

6. Courroie d'entraînement selon l'une des revendications 1 à 5, **caractérisée en ce que** le matériau des fils de chaîne et/ou le matériau des fils de trame sont dotés d'un agent de protection contre le vieillissement.

7. Courroie d'entraînement selon la revendication 6, **caractérisée en ce que** l'agent de protection contre le vieillissement comporte les éléments cuivre et/ou iode.

8. Courroie d'entraînement selon l'une des revendications 1 à 7, **caractérisée en ce que** la teneur en matériau de fils de trame est plus élevée sur le côté extérieur du revêtement (10) en tissu que sur son côté intérieur.

9. Courroie d'entraînement selon l'une des revendications 1 à 8, **caractérisée en ce que** le revêtement (10) en tissu est relié au soubassement (5) au moyen d'une couche de polyoléfine.

10. Courroie d'entraînement selon l'une des revendications 1 à 9, **caractérisée en ce que** le corps élastique de base est un vulcanisé à base d'un mélange de caoutchouc vulcanisé qui contient au moins un composant de caoutchouc et des ingrédients de mélange.

11. Courroie d'entraînement selon l'une des revendications 1 à 10, **caractérisée en ce que** la courroie d'entraînement (1) est configurée comme courroie d'entraînement trapézoïdale crantée.

12. Utilisation d'une courroie d'entraînement selon l'une des revendications 1 à 11 pour un véhicule doté d'un système de démarrage/arrêt.

13. Utilisation d'une courroie d'entraînement selon l'une des revendications 1 à 11 pour un entraînement doté d'une poulie à vilebrequin découplée.
